(19) Europäisches Patentamt

European Patent Office

Office européen des brevets

(11) **EP 1 413 900 B1**

## (12) EUROPEAN PATENT SPECIFICATION

(45) Date of publication and mention
of the grant of the patent:
**08.02.2006 Bulletin 2006/06**

(51) Int Cl.:
***G02B 13/04*** *(2006.01)*   ***G02B 9/10*** *(2006.01)*

(21) Application number: **04075077.0**

(22) Date of filing: **12.11.1997**

(54) **Lenses for electronic imaging systems**

Linsen für ein elektronischen Abbildungssystem

Lentilles pour un système d'imagerie électronique

(84) Designated Contracting States:
**DE FR GB NL**

(30) Priority: **29.11.1996 US 33348**

(43) Date of publication of application:
**28.04.2004 Bulletin 2004/18**

(62) Document number(s) of the earlier application(s) in
accordance with Art. 76 EPC:
**97946529.1 / 1 010 028**

(73) Proprietor: **3M Innovative Properties Company
St. Paul,
Minnesota 55133-3427 (US)**

(72) Inventor: **Kreitzer, Melvyn H.
Cincinnati, OH 45241 (US)**

(74) Representative: **Ertl, Nicholas Justin et al
Elkington and Fife,
Prospect House,
8 Pembroke Road
Sevenoaks,
Kent TN13 1XR (GB)**

(56) References cited:
**WO-A-96/17265        US-A- 3 997 248
US-A- 5 475 536        US-A- 5 508 848**

**Description**

FIELD OF THE INVENTION

This invention relates to lenses for use with electronic imaging systems, e.g., systems employing charged coupled devices (CCDs) or similar light sensitive electronic components. Such systems are well known in the art and descriptions thereof can be found in various references, including Rose et al., "Physical Limits to the Performance of Imaging Systems," Physics Today, September 1989, pages 24-32 and the references cited therein; and Sequin et al., "Charge Transfer Devices," Advances in Electronics and Electron Physics, suppl. 8, L. Marton editor, Academic Press, New York, 1975, the relevant portions of all of which are incorporated herein by reference.

BACKGROUND OF THE INVENTION

Electronic imaging systems require lens systems which are capable of producing high quality images which have a small size, i.e., they require lens systems having short focal lengths. For example, CCDs having a diagonal of approximately 5.5 mm (known as 1/3 inch CCDs) are widely available. Within this small size, a typical CCD will have over 200,000 pixels, thus giving the device a resolution on the order of 40 cycles per millimeter at the surface of the CCD.
Short focal length lens systems typically comprise small lens elements. Such elements, if they are too small, can be difficult to handle and assemble into a finished unit. Cost is always a dominant factor for lenses for electronic imaging systems, especially where the system is to be part of a mass marketed product. Because CCDs have a high level of resolution, lenses used with such devices must be of high optical quality. This requirement exacerbates the cost problem. In particular, the requirement puts a high premium on achieving a high level of optical performance with a minimum of lens elements.
WO96/17265 discloses a lens system corresponding to the preamble of claim 1

SUMMARY OF THE INVENTION

The lens system according to the present invention is defined by the appended claims.

BRIEF DESCRIPTION OF THE DRAWINGS

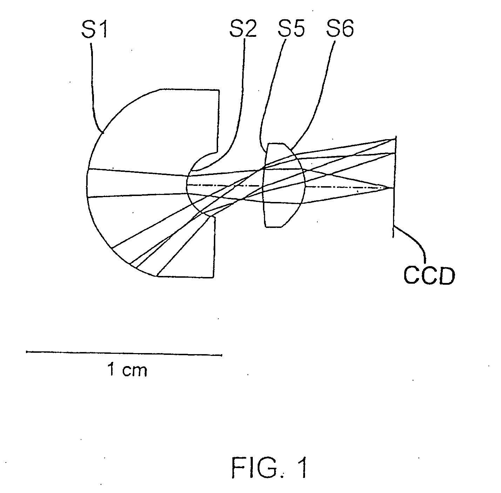

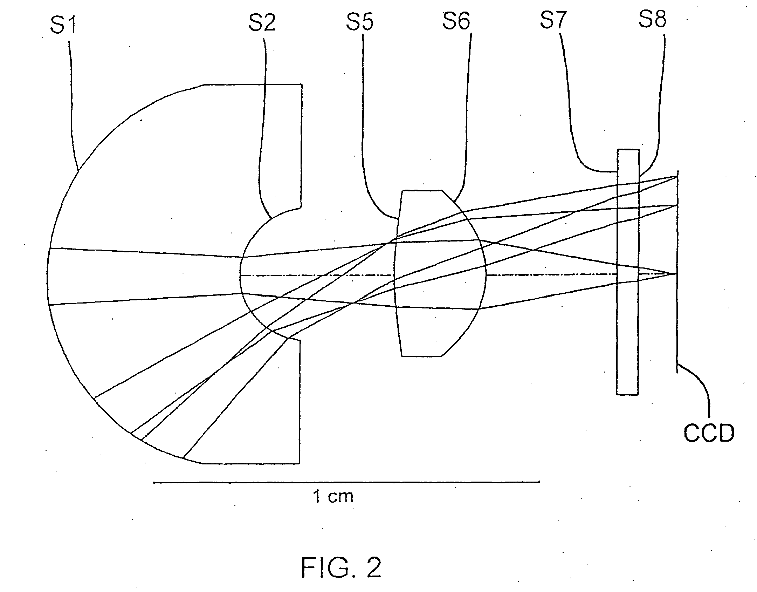

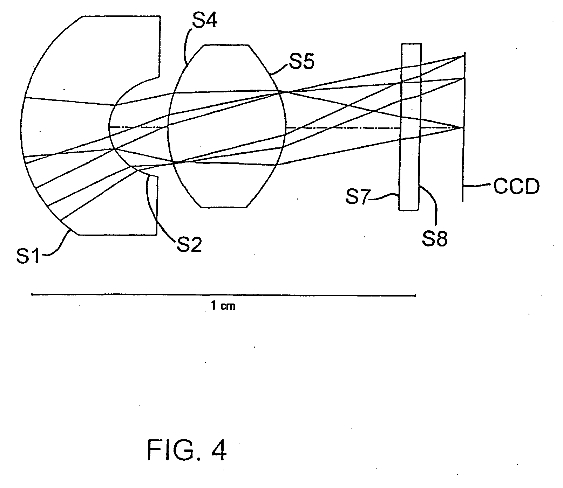

Figures 1-4 are schematic side views of lens systems constructed in accordance with the invention.
These drawings, which are incorporated in and constitute part of the specification, illustrate the preferred embodiments of the invention, and together with the description, serve to explain the principles of the invention. It is to be understood, of course, that both the drawings and the description are explanatory only and are not restrictive of the invention.

DESCRIPTION OF THE PREFERRED EMBODIMENTS

As discussed above, the lens systems of the present invention consist of two lens elements.
The first lens element has a negative optical power, i.e., $f_1 < 0$, and preferably has the following properties:

$$|f_1| / f_0 > 1.0;$$

$$t_1 / f_0 > 0.5;$$

and

$$D_1 / D_{EP} > 2.5;$$

where $f_0$ is the focal length of the lens system, $f_1$ is the focal length of the first lens element, $t_1$ is the thickness of the first lens element, $D_1$ is the diameter of the first lens element, and $D_{EP}$ is the diameter of the entrance pupil of the lens system. The use of a thick front element provides correction for the field curvature of the system.

In certain embodiments, the lens systems of the invention satisfy the following relationships:

$$|f_1| / f_0 > 1.5;$$

and

$$t_1 / f_0 > 0.7.$$

In connection with these embodiments, the $t_1/f_0$ ratio is most preferably greater than 1.0.

As used herein and in the claims, the diameter of a lens element is the element's largest clear aperture and the diameter of the entrance pupil of a lens system is the system's equivalent singlet focal length divided by the system's infinity f-number. Based on these definitions, the lens systems of Examples 1-4 set forth below have $D_1$ values of 9.5, 9.6, 11.9, and 5.6 mm, and $D_{EP}$ values of 1.5, 1.5, 2.3, and 1.5 mm, so that their $D_1/D_{EP}$ ratios are 6.3, 6.4, 5.2, and 3.7, respectively. Preferably, the $D_1/D_{EP}$ ratio is greater than 3.0.

The second lens element has a positive optical power, i.e., $f_2 > 0$, and preferably has the following properties:

$$f_2 / f_0 < 2.0;$$

$$d_{12} / f_0 > 0.25;$$

$$D_2/D_{EP} > 1.3;$$

and

$$t_2 / f_0 > 0.5;$$

where $f_2$ is the focal length of the second lens element, $d_{12}$ is the distance between the first and second lens elements, $D_2$ is the diameter of the second lens element, and $t_2$ is the thickness of the second lens element. Based on the above definition of the diameter of a lens element, the lens systems of Examples 1-4 set forth below have $D_2$ values of 4.0, 4.0, 4.5, and 3.9 mm, and $D_2/D_{EP}$ ratios of 2.7, 2.7, 2.0, and 2.6, respectively. Preferably, the $D_2/D_{EP}$ ratio is greater than 1.5.

In certain embodiments, the lens systems of the invention satisfy the following relationships:

$$f_2 / f_0 < 1.6;$$

$$d_{12} / f_0 > 0.5;$$

and

$$D_2/D_{EP} > 1.5.$$

In some embodiments, the second lens element is a refractive-diffractive hybrid element. The fabrication of such elements is well known in the art. See, for example, C. Londono, "Design and Fabrication of Surface Relief Diffractive Optical Elements, or Kinoforms, with Examples for Optical Athermalization," Ph.D. diss., Tufts University, 1992, and the references cited therein, the relevant portions of all of which are incorporated herein by reference. Diffractive surfaces have the problem of diffraction efficiency, i.e., all orders do not come to a perfect focus. This effect is often seen as "glare". For an electronic imaging system application, the diffraction efficiency problem can be addressed by digital processing of the electronic image.

When the second lens element is a refractive-diffractive hybrid, the ratio of $f_2/f_0$, where $f_2$ includes the contribution of the diffractive surface, is preferably greater than 1.0, e.g., the ratio is approximately 1.5. When a hybrid is not used, the $f_2/f_0$ ratio is preferably less than 1.0.

The use of a refractive-diffractive hybrid element for the second lens element provides color correction for the lens system and allows both the first and second lens elements to be composed of a low dispersion material such as acrylic. If such a hybrid element is not used, the first lens element should have a higher dispersion than the second lens element. For example, the first lens element can be composed of styrene and the second lens element can be composed of acrylic for such embodiments. Other plastics can, of course, be used if desired. For example, in place of styrene, polycarbonates and copolymers of polystyrene and acrylic (e.g., NAS) having flint-like dispersions can be used. See The Handbook of Plastic Optics, U.S. Precision Lens, Inc., Cincinnati, Ohio, 1983, pages 17-29. The highest levels of color correction (both axial and lateral) are generally achieved when the second lens element is a refractive-diffractive hybrid element.

In certain preferred embodiments, the first lens element has a spherical surface and a conic surface and the second lens element also has a spherical surface and a conic surface. This arrangement facilitates manufacture of the lens system.

In other embodiments, the second lens element can have two conic surfaces, and the first lens element can have an object side surface which is spherical and an image side surface which in some embodiments is a conic and in other embodiments is a general asphere. Specifically, the image side surface of the first lens element can be a conic when the second lens element is a refractive-diffractive hybrid element. Otherwise, for these embodiments, the image side surface of the first lens element is typically a general asphere to facilitate aberration correction. Conic surfaces are preferred to general aspherical surfaces since the polynomial used to define a general aspherical surface (see below) can lead to undesired surface configurations if the diameter is extended beyond the clear aperture, while a conic surface does not suffer from this problem.

The terms "spherical", "conic", and "general asphere" are used herein and in the claims in accordance with their conventional meanings in terms of a lens surface equation of the following type:

$$z = \frac{cy^2}{1 + [1 - (1+k)c^2 y^2]^{1/2}} + Dy^4 + Ey^6 + Fy^8 + Gy^{10} + Hy^{12} + Iy^{14}$$

where z is the surface sag at a distance y from the optical axis of the system, c is the curvature of the lens at the optical axis, and k is a conic constant

Thus, a surface is spherical if "k" and "D" through "I" are all zero, a surface is a conic if "k" is non-zero and "D" through "I" are all zero, and a surface is a general asphere if at least one of "D" through "I" is non-zero. A surface for which "k" is non-zero and at least one of "D" through "I" is non-zero, is a general aspherical surface. Other equations besides that set forth above can of course be used to describe a surface of a lens element, and analogous considerations regarding the values of the parameters of such an equation will apply in determining whether a particular surface is a spherical surface, a conic surface, or a general aspherical surface.

Figures 1 to 4 illustrate various lens systems constructed in accordance with the invention. Corresponding prescriptions and optical properties appear in Tables 1 to 4, respectively. The Hoya designation is used for the glass plate employed in Figures 2 and 4. Equivalent glasses made by other manufacturers can be used in the practice of the invention. Industry acceptable materials are used for the plastic elements.

The aspheric coefficients set forth in the Tables 1 and 2 are for use in the equation set forth above. The abbreviations used in the tables are as follows:

EFL       effective focal length
FVD       front vertex distance
f/        f-number
ENP       entrance pupil as seen from the long conjugate
BRL       barrel length
OBJ HT    object height

MAG      magnification
STOP     location and size of aperture stop
IMD      image distance
OBD     object distance
OVL      overall length.

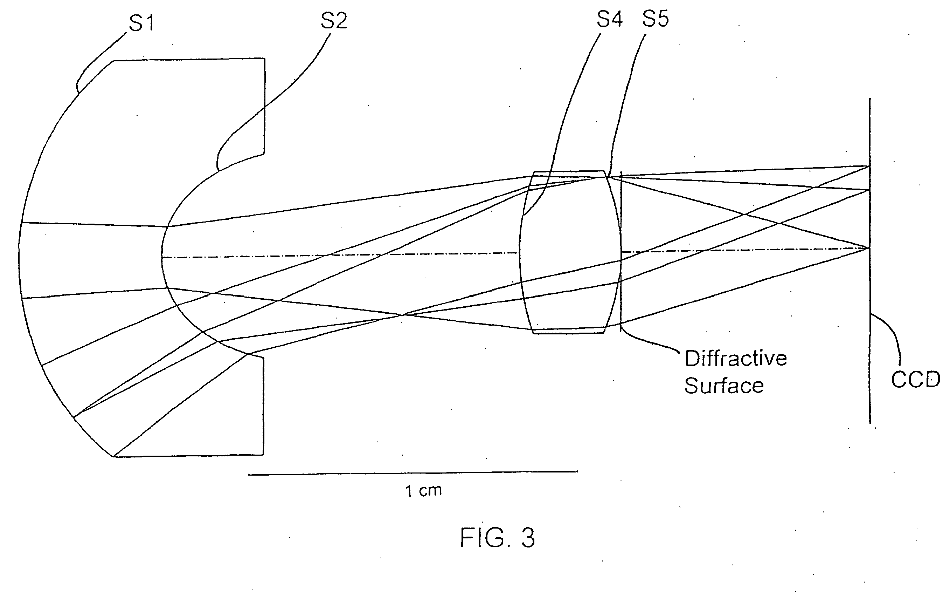

The designation "c" associated with various of the surfaces in the tables represents a conic surface. The designation "a" associated with surface 2 of Tables 1 and 2 represents a general aspherical surface. Surfaces 6 and 7 in Table 3 represent a diffractive surface. The asterisks used in this table represent the index of refraction and the Abbe numbers used in the Sweatt model for a diffractive surface, e.g., a $N_e$ value of 9999 and a $V_e$ value of -3.4. See W.C. Sweatt, "Mathematical Equivalence between a Holographic Optical Element and an Ultra High Index Lens," Journal of the Optical Society of America, 69:486-487, 1979. Although shown as a separate element in Figure 3, the diffractive surface is in fact part of the second lens element. Surface 3 in Tables 1-4 is a vignetting surface. All dimensions given in the tables are in millimeters.

As is conventional, the figures are drawn with the long conjugate on the left and the short conjugate on the right. Accordingly, in the typical application of the invention, the object to be viewed will be on the left and an electronic imaging system, e.g., a system employing a CCD, will be on the right.

Although specific embodiments of the invention have been described and illustrated, it is to be understood that the invention is as defined in the appended claims.

## TABLE 1

| Surf. No. | Type | Radius | Thickness | Glass | Clear Aperture Diameter |
|---|---|---|---|---|---|
| 1 | | 4.9397 | 5.08731 | STYRENE | 9.54 |
| 2 | ac | 1.5323 | 2.89159 | | 3.20 |
| 3 | | ∞ | 0.92114 | | 1.47 |
| 4 | | Aperture stop | 0.18423 | | 1.68 |
| 5 | c | 6.0166 | 2.21905 | ACRYLIC | 4.00 |
| 6 | c | -2.0489 | 4.67874 | | 4.00 |

**Symbol Description**

a - Polynomial asphere
c - Conic section

**Conics**

| Surface Number | Constant |
|---|---|
| 2 | -1.3889E-01 |
| 5 | -4.7668E+01 |
| 6 | -7.2577E-01 |

**Even Polynomial Aspheres**

| Surf. No. | D | E | F | G | H | I |
|---|---|---|---|---|---|---|
| 2 | 1.3599E-03 | 2.1563E-03 | -6.1775E-03 | 2.4938E-03 | 2.6865E-05 | -1.4075E-04 |

**SYSTEM FIRST ORDER PROPERTIES**

```
OBJ. HT: -310.00      f/    2.80 MAG:      -0.0080
STOP:   0.00 after surface  4. DIA:  1.6001
EFL:   4.09873      FVD:   15.9821    ENP:   10.9749
IMD:   4.67874      BRL:   11.3033    EXP: -2.80210
OBD: -503.622       OVL:   519.604
```

**First Order Properties of Elements**

| Element Number | Surface Numbers | | Power | f' |
|---|---|---|---|---|
| 1 | 1 | 2 | -0.11867 | -8.4271 |
| 2 | 5 | 6 | 0.29369 | 3.4050 |

## TABLE 2

| Surf. No. | Type | Radius | Thickness | Glass | Clear Aperture Diameter |
|---|---|---|---|---|---|
| 1 | | 4.8906 | 4.90000 | STYRENE | 9.60 |
| 2 | ac | 1.5840 | 2.88000 | | 3.30 |
| 3 | | ∞ | 0.95000 | | 1.50 |
| 4 | | Aperture stop | 0.19000 | | 1.60 |
| 5 | c | 6.2277 | 2.40000 | ACRYLIC | 4.00 |
| 6 | c | -2.0793 | 3.37000 | | 4.00 |
| 7 | | ∞ | 0.55000 | C5 | 6.00 |
| 8 | | ∞ | 1.00005 | | 6.00 |

**Symbol Description**

a – Polynomial asphere
c – Conic section

**Conics**

| Surface Number | Constant |
|---|---|
| 2 | -1.3889E-01 |
| 5 | -4.9915E+01 |
| 6 | -7.4312E-01 |

**Even Polynomial Aspheres**

| Surf. No. | D | E | F | G | H | I |
|---|---|---|---|---|---|---|
| 2 | -4.3543E-03 | 9.2650E-03 | -9.9861E-03 | 4.0803E-03 | -6.4199E-04 | 3.4693E-06 |

**SYSTEM FIRST ORDER PROPERTIES**

```
OBJ. HT: -308.00      f/   2.82 MAG:      -0.0080
STOP:   0.00 after surface  4. DIA:  1.5956
EFL:   4.16672    FVD:  16.2400    ENP:  10.6682
IMD:   1.00005    BRL:  15.2400    EXP:  -6.87326
OBD:  -512.386    OVL:  528.626
```

**First Order Properties of Elements**

| Element Number | Surface Numbers | | Power | f' |
|---|---|---|---|---|
| 1 | 1 | 2 | -0.11358 | -8.8047 |
| 2 | 5 | 6 | 0.28651 | 3.4903 |

## TABLE 3

| Surf. No. | Type | Radius | Thickness | Glass | Clear Aperture Diameter |
|---|---|---|---|---|---|
| 1 | | 7.5616 | 4.34575 | ACRYLIC | 11.90 |
| 2 | c | 2.4466 | 7.85084 | | 5.83 |
| 3 | | ∞ | 2.90000 | | 3.75 |
| 4 | c | 6.4812 | 3.08783 | ACRYLIC | 4.57 |
| 5 | c | -5.1558 | 0.00100 | | 4.54 |
| 6 | | -1000.0000 | 0.00100 | ****** | 4.53 |
| 7 | | -998.8000 | 7.57866 | | 4.53 |

**Symbol Description**

c - Conic section

**Conics**

| Surface Number | Constant |
|---|---|
| 2 | -3.9940E-01 |
| 4 | -2.4310E+00 |
| 5 | -2.2088E+00 |

**SYSTEM FIRST ORDER PROPERTIES**

OBJ. HT: -275.00     f/     1.84 MAG:      -0.0090
STOP:    2.53 after surface   4. DIA:   4.4613
EFL:   4.25080     FVD:   25.7651     ENP:   11.2131
IMD:   7.57866     BRL:   18.1864     EXP: -.388641
OBD: -463.377     OVL:   489.142

**First Order Properties of Elements**

| Element Number | Surface Numbers | | Power | f' |
|---|---|---|---|---|
| 1 | 1 | 2 | -0.98183E-01 | -10.185 |
| 2 | 4 | 5 | 0.15688 | 6.3745 |
| 3 | 6 | 7 | 0.12022E-01 | 83.183 |

## TABLE 4

| Surf. No. | Type | Radius | Thickness | Glass | Clear Aperture Diameter |
|---|---|---|---|---|---|
| 1 | | 3.2860 | 2.29000 | STYRENE | 5.60 |
| 2 | c | 1.0740 | 1.51000 | | 2.30 |
| 3 | | ∞ | 0.00000 | | 1.90 |
| 4 | | 2.8130 | 3.10000 | ACRYLIC | 3.90 |
| 5 | c | -1.9130 | 0.00000 | | 3.90 |
| 6 | | Aperture stop | 3.00000 | | 1.90 |
| 7 | | ∞ | 0.50000 | C5 | 4.00 |
| 8 | | ∞ | 1.11707 | | 4.00 |

**Symbol Description**

c - Conic section

**Conics**

| Surface Number | Constant |
|---|---|
| 2 | -3.1855E-01 |
| 5 | -1.4577E+00 |

**SYSTEM FIRST ORDER PROPERTIES**

```
OBJ. HT: -225.00        f/  2.50    MAG: -0.0080
STOP: 0.00  after surface  6.  DIA: 1.811
EFL:  3.81046      FVD:  11.5171    ENP:  5.46002
IMD:  1.11707      BRL:  10.4000    EXP: -3.32796
OBD: -474.118      OVL: 485.635
```

**First Order Properties of Elements**

| Element Number | Surface Numbers | | Power | f |
|---|---|---|---|---|
| 1 | 1 | 2 | -0.22890 | -4.3688 |
| 2 | 4 | 5 | 0.33962 | 2.9444 |

**Claims**

1. A lens system for forming an image of an object, said system consisting in order from its object side to its image side of one of the following combinations, namely:

   (i) a negative first lens element having a spherical surface and a general aspherical surface, and a positive second lens element having two conic surfaces;
   (ii) a negative first lens element having a spherical surface and a conic surface, and a positive second lens element having two conic surfaces;
   (iii) a negative first lens element having a spherical surface and a conic surface, and a positive second lens element having a spherical surface and a conic surface, **characterized in that**

the system has a focal length $f_0$, the first lens element has a focal length $f_1$ and a thickness $t_1$, and the second lens element has a focal length $f_2$ and a thickness $t_2$, said second lens element being spaced from the first lens element

by a distance $d_{12}$,
wherein:

(a)

$$t_1/f_0 > 0.5;$$

and
(b)

$$t_2/f_0 > 0.5;$$

and wherein the terms "spherical surface", "conic surface", and "general aspherical surface" are used herein in terms of a lens surface equation of the type:

$$z = \frac{cy^2}{1 + [1 - (1+k)c^2 y^2]^{1/2}} + Dy^4 + Ey^6 + Fy^8 + Gy^{10} + Hy^{12} + Iy^{14}$$

where z is the surface sag at a distance y from the optical axis of the system, c is the curvature of the lens at the optical axis, and k is a conic constant, a surface being spherical if "k" and "D" through "I" are all zero, a surface being a conic if "k" is non-zero and "D" through "I" are all zero, and a surface being a general asphere if at least one of the "D" through "I" is non-zero.

2. The lens system of Claim 1, wherein when the system consists of combination (ii) the second lens element is a refractive diffractive hybrid element, and when the system consists of combination (iii) the conic surface is on the image side of each of the first and second lens elements.

3. The lens system of Claim 1 wherein:

$$d_{12}/f_0 > 0.25.$$

4. The lens system of Claim 1 wherein:

$$|f_1|/f_0 > 1.0.$$

5. The lens system of Claim 1, wherein:

$$|f_1|/f_0 > 1.5;$$

$$t_1/f_0 > 0.7;$$

and

$$d_{12}/f_0 > 0.5.$$

6. The lens system of any preceding claim, wherein:

$$f_2/f_0 < 2.0$$

**7.** The lens system of Claim 6, wherein:

$$f_2/f_0 < 1.6$$

**8.** The lens system of any preceding Claim, wherein the first lens element has a higher dispersion than the second lens element.

**9.** The lens system of Claim 8, wherein the first lens element is composed of styrene and the second lens element is composed of acrylic.

**10.** The lens system of any preceding Claim, wherein the second lens element is a refractive-diffractive hybrid element.

**11.** The lens system of Claim 10, wherein the first and second lens elements are composed of acrylic.

**12.** The lens system of Claim 10, wherein:

$$f_2/f_0 > 1.0.$$

**13.** The lens system of any preceding Claim, wherein the lens system has an entrance pupil whose diameter is $D_{EP}$, the first lens element has a diameter $D_1$, and the second lens element has a diameter $D_2$, where:

$$D_1/D_{EP} > 2.5;$$

and

$$D_2/D_{EP} > 1.3.$$

**14.** The lens system of Claim 13, wherein:

$$D_1/D_{EP} > 3.0;$$

and

$$D_2/D_{EP} > 1.5.$$

**15.** An optical system comprising a lens system for forming an image of an object and an electronic imaging system for detecting said image, said lens system being the lens system of any preceding claim.

**16.** The optical system of Claim 15, wherein the electronic imaging system is a charged coupled device.

**Revendications**

**1.** Système de lentilles pour former une image d'un objet, ledit système comprenant, dans cet ordre, de son côté objet à son côté image, l'une des combinaisons suivantes, à savoir :

(i) un premier élément de lentille négatif comportant une surface sphérique et une surface générale asphérique, et un deuxième élément de lentille positif comportant deux surfaces coniques ;

(ii) un premier élément de lentille négatif comportant une surface sphérique et une surface conique, et un deuxième élément de lentille positif comportant deux surfaces coniques ;

(iii) un premier élément de lentille négatif comportant une surface sphérique et une surface conique, et un deuxième élément de lentille positif comportant une surface sphérique et une surface conique, **caractérisé en ce que**

le système présente une distance focale $f_0$, le premier élément de lentille présente une distance focale $f_1$ et une épaisseur $t_1$, et le deuxième élément de lentille présente une longueur focale $f_2$ et une épaisseur $t_2$, ledit deuxième élément de lentille étant espacé du premier élément de lentille d'une distance $d_{12}$, où :

(a)

$$t_1/f_0 > 0,5 \;;$$

(b)

$$t_2/f_0 > 0,5 \;;$$

et où les expressions « surface sphérique », « surface conique » et « surface générale asphérique » sont utilisées ici en terme d'une équation de surface de lentille du type :

$$z = \frac{cy^2}{1+[1-(1+k)c^2 y^2]^{1/2}} + Dy^4 + Ey^6 + Fy^8 + Gy^{10} + Hy^{12} + Iy^{14}$$

où z est la flèche de surface à une distance y de l'axe optique du système, c est la courbure de la lentille au niveau de l'axe optique et k est une constante conique, une surface étant sphérique si « k » et « D » à « I » sont toutes nulles, une surface étant conique si « k » est non nulle et « D » à « I » sont toutes nulles et une surface étant générale asphérique si au moins une des « D » à « I » est non nulle.

2. Système de lentilles selon la revendication 1, dans lequel, lorsque le système comprend une combinaison (ii), la deuxième élément de lentille est un élément hybride réfringent-diffractif, et, lorsque le système comprend une combinaison (iii), la surface conique est du côté image de chacun des premier et deuxième élément de lentille.

3. Système de lentilles selon la revendication 1, dans lequel :

$$d_{12}/f_0 > 0,25.$$

4. Système de lentilles selon la revendication 1, dans lequel :

$$|f_1|/f_0 > 1,0.$$

5. Système de lentilles selon la revendication 1, dans lequel :

$$|f_1|/f_0 > 1,5 \;;$$

$$t_1/f_0 > 0,7 \;;$$

et

$$d_{12}/f_0 > 0,5.$$

6. Système de lentilles selon l'une quelconque des revendications précédentes, dans lequel :

$$f_2/f_0 < 2,0.$$

7. Système de lentilles selon la revendication 6, dans lequel :

$$f_2/f_0 < 1,6.$$

8. Système de lentilles selon l'une quelconque des revendications précédentes, dans lequel le premier élément de lentille présente une dispersion supérieure à celle du deuxième élément de lentille.

9. Système de lentilles selon la revendication 8, dans lequel le premier élément de lentille est composé de styrène et le deuxième élément de lentille est composé d'acrylique.

10. Système dé lentilles selon l'une quelconque des revendications précédentes, dans lequel le deuxième élément de lentille est un élément hybride réfringent-diffractif.

11. Système de lentilles selon la revendication 10, dans lequel les premier et deuxième éléments de lentille sont composés d'acrylique.

12. Système de lentilles selon la revendication 10, dans lequel :

$$f_2/f_0 > 1,0.$$

13. Système de lentilles selon l'une quelconque des revendications précédentes, dans lequel le système de lentilles possède une pupille d'entrée dont le diamètre est $D_{EP}$, le premier élément de lentille présente un diamètre $D_1$ et le deuxième élément de lentille présente un diamètre $D_2$, où :

$$D_1/D_{EP} > 2,5 ;$$

et

$$D_2/D_{EP} > 1,3.$$

14. Système de lentilles selon la revendication 13, dans lequel :

$$D_1/D_{EP} > 3,0 ;$$

et

$$D_2/D_{EP} > 1,5.$$

15. Système optique comprenant un système de lentilles pour former une image d'un objet et un système d'imagerie électronique pour détecter ladite image, ledit système de lentilles étant le système de lentilles selon l'une quelconque des revendications précédentes.

**16.** Système optique selon la revendication 15, dans lequel le système d'imagerie optique est un dispositif à couplage de charge.

**Patentansprüche**

**1.** Linsensystem zum Ausbilden eines Bilds eines' Objekts, wobei das System in der Reihenfolge von seiner Objektseite zu seiner Bildseite aus einer der folgenden Kombinationen besteht, nämlich:

(i) ein negatives erstes Linsenelement mit einer sphärischen Fläche und einer allgemein asphärischen Fläche und ein positives zweites Linsenelement mit zwei konischen Flächen;
(ii) ein negatives erstes Linsenelement mit einer sphärischen Fläche und einer konischen Fläche und ein positives zweites Linsenelement mit zwei konischen Flächen;
(iii) ein negatives erstes Linsenelement mit einer sphärischen Fläche und einer konischen Fläche und ein positives zweites Linsenelement mit einer sphärischen Fläche und einer konischen Fläche,

**dadurch gekennzeichnet, daß**
das System eine Brennweite $f_0$, das erste Linsenelement eine Brennweite $f_1$ und eine Dicke $t_1$ und das zweite Linsenelement eine Brennweite $f_2$ und eine Dicke $t_2$ aufweisen, wobei das zweite Linsenelement von dem ersten Linsenelement mit einem Abstand $d_{12}$ beabstandet ist,
wobei:

(a)

$$t_1/f_0 > 0,5$$

und
(b)

$$t_2/f_0 > 0,5;$$

und wobei die Ausdrücke "sphärische Fläche", "konische Fläche" und "allgemein asphärische Fläche" hier im Hinblick auf eine Linsenflächengleichung des folgenden Typs verwendet werden:

$$z = \frac{cy^2}{1+[1-(1+k)c^2 y^2]^{1/2}} + Dy^4 + Ey^6 + Fy^8 + Gy^{10} + Hy^{12} + Iy^{14}$$

wobei z die Flächendurchbiegung in einer Entfernung y von der optischen Achse des Systems ist, c die Krümmung der Linse bei der optischen Achse ist und k eine konische Konstante ist, wobei eine Fläche sphärisch ist, wenn "k" und "D" durch "I" alle null sind, eine Oberfläche konisch ist, wenn "k" nicht-null und "D" durch "I" alle null sind und eine Fläche eine allgemeine Asphäre ist, wenn mindestens einer der Werte "D" durch "I" nicht-null ist.

**2.** Linsensystem nach Anspruch 1, wobei, wenn das System aus der Kombination (ii) besteht, das zweite Linsenelement ein brechend/beugendes Hybridelement ist, und wenn das System aus Kombination (iii) besteht, die konische Fläche sich auf der Bildseite jedes der ersten und zweiten Linsenelemente befindet.

**3.** Linsensystem nach Anspruch 1, wobei:

$$d_{12}/f_0 > 0,25.$$

4. Linsensystem nach Anspruch 1, wobei:

$$|f_1|/f_0 > 1,0.$$

5. Linsensystem nach Anspruch 1, wobei:

$$|f_1|/f_0 > 1,5;$$

$$t_1/f_0 > 0,7$$

und

$$d_{12}/f_0 > 0,5.$$

6. Linsensystem nach einem der vorhergehenden Ansprüche, wobei:

$$f_2/f_0 < 2,0.$$

7. Linsensystem nach Anspruch 6, wobei:

$$f_2/f_0 < 1,6.$$

8. Linsensystem nach einem der vorhergehenden Ansprüche, wobei das erste Linsenelement eine höhere Dispersion als das zweite Linsenelement aufweist.

9. Linsensystem nach Anspruch 8, wobei das erste Linsenelement aus Styrol besteht und das zweite Linsenelement aus Acryl besteht.

10. Linsensystem nach einem der vorhergehenden Ansprüche, wobei das zweite Linsenelement ein brechend/beugendes Hybridelement ist.

11. Linsensystem nach Anspruch 10, wobei die ersten und zweiten Linsenelemente aus Acryl bestehen.

12. Linsensystem nach Anspruch 10, wobei:

$$f_2/f_0 > 1,0.$$

13. Linsensystem nach einem der vorhergehenden Ansprüche, wobei das Linsensystem eine Eintrittpupille aufweist, deren Durchmesser $D_{EP}$ ist, das erste Linsenelement einen Durchmesser $D_1$ aufweist und das zweite Linsenelement einen Durchmesser $D_2$ aufweist, wobei

$$D_1/D_{EP} > 2,5$$

und

$$D_2/D_{EP} > 1,3.$$

**14.** Linsensystem nach Anspruch 13, wobei:

$$D_1/D_{EP} > 3,0$$

und

$$D_2/D_{EP} > 1,5.$$

**15.** Optisches System, das ein Linsensystem aufweist zum Ausbilden eines Bilds eines Objekts und ein elektronisches Bildgebungssystem zum Detektieren des Bilds, wobei das Linsensystem das Linsensystem nach einem der vorhergehenden Ansprüche ist.

**16.** Optisches System nach Anspruch 15, wobei das elektronische Bildgebungssystem ein ladungsgekoppeltes Bauelement ist.

FIG. 1

S1 S2 S5 S6 CCD

1 cm

S8    S7    S6    S5    S2    S1

CCD

1 cm

FIG. 2

S1  S2                    S4  S5

Diffractive
Surface

CCD

1 cm

FIG. 3

FIG. 4